# FASCICULE DE BREVET EUROPEEN

(11) **EP 2 996 874 B1**
(45) Date de publication et mention de la délivrance du brevet: **02.09.2020**
(21) Numéro de dépôt: 14729963.0
(22) Date de dépôt: 15.05.2014
(51) Int. Cl.: B32B 5/18, B32B 27/32, C09D 5/20

(54) **FILM ADHÉSIF SENSIBLE A LA PRESSION ET SON UTILISATION POUR LA PROTECTION DE SURFACES**
DRUCKEMPFINDLICHE KLEBEFOLIE UND VERWENDUNG DAVON ZUM SCHUTZ VON OBERFLÄCHEN
PRESSURE-SENSITIVE ADHESIVE FILM AND USE OF SAME FOR PROTECTING SURFACES

(30) Priorité: 16.05.2013 FR 1354382
(43) Date de publication de la demande: 23.03.2016
(73) Titulaire: Novacel, 76250 Deville-les-Rouen (FR)
(72) Inventeur: MASSON, Jean-Loup, F-76230 Bois-Guillaume (FR); DE FILIPPIS, Farah, F-76300 Sotteville-les-Rouen (FR)
(74) Mandataire: Cabinet Beau de Loménie
(86) Numéro de dépôt international: PCT/FR2014/051137
(87) Numéro de publication internationale: WO 2014/184499

(56) Documents cités:
- GB-A- 844 935
- JP-A- 2009 084 367
- US-A1- 2010 249 258

## Description

L'invention concerne le domaine de la protection temporaire de surface. Plus particulièrement, l'invention concerne un film adhésif sensible à la pression ayant une couche expansée formulée et adaptée pour une utilisation dans le domaine de la protection temporaire de surfaces.

Il est aujourd'hui possible de produire des films plastiques soufflés, ou coulés, de « faible » densité (c'est-à-dire une densité environ 20 à 40% inférieure à celle des mêmes films réalisés avec la même matière mais par une technologie « conventionnelle ») dans des épaisseurs qui peuvent être inférieures à 100 µm. Cette faible densité est obtenue par l'utilisation d'agents d'expansion, notamment par injection de gaz dans une couche du film à partir d'une vis d'extrusion. De tels films plastiques (de faible densité, mais souvent à de plus fortes épaisseurs) sont généralement utilisés pour l'emballage de produits manufacturés.

Les films soufflés sont typiquement produits à partir de polyéthylène. A titre d'exemple, on peut se référer aux demandes de brevet WO 97/20888 et WO 01/92403.

Par ailleurs, les films de protection de surface sensibles à la pression sont maintenant largement répandus. Ces films sont notamment utilisés pour protéger des surfaces laquées ou non, métalliques ou non, comme par exemple des carrosseries automobiles, ou encore des surfaces plastiques en plaques (PMMA, PVC, PC, PETg, etc...) ou profilées, des surfaces stratifiées, des surfaces vernies, du verre, revêtu ou non, de la moquette, etc.... Un des impératifs auxquels les films de protection de surface doivent répondre est de laisser le moins de marques, de pollution ou de résidus d'adhésif possibles sur les surfaces protégées une fois le film enlevé. Cela nécessite des formulations spécifiques de films, d'adhésifs et éventuellement d'encres et de vernis, ainsi que des procédés particuliers d'assemblage de ces composants. Les films de « faible » densité, mentionnés ci-dessus, ne sont toutefois pas aujourd'hui formulés pour répondre aux besoins mécaniques, thermiques, qualitatifs, ou de vieillissement naturel, du marché du film autoadhésif de protection temporaire de surface. Ces supports ont toutefois un intérêt écologique, par l'économie de matière constatée.

Les films de protection de surface sensibles à la pression comprennent généralement une couche support et une couche adhésive formée sur celle-ci. Ils peuvent être préparés par enduction d'un adhésif en phase solvant, en phase aqueuse, par voie sèche (hotmelt ou warmmelt) sur la couche support, ou par co-extrusion de la couche support et de la couche adhésive en une seule opération. A titre d'exemples on peut citer les films décrits dans les documents suivants : EP-A-0 519 278 ; US 5 925 456 ; FR-A-2 969 626 ; DE-A-10 2005 055 913.

JP-A-2009 084 367 décrit un film adhésif double face composé d'une monocouche en polyéthylène revêtue de part et d'autre par un adhésif sensible à la pression de type acrylique. US-A-2010/249258 décrit la préparation d'un film adhésif double face par enduction d'une feuille de résine thermoplastique expansée (monocouche), avec une colle acrylique.

Par ailleurs, lorsqu'un film de protection de surface est préparé par la technique d'enduction, la couche adhésive est toujours enduite sur une surface lisse (ou relativement lisse, par exemple de brillance supérieure à 70, telle que mesurée selon la norme ASTM2457). La couche support a en général deux surfaces lisses mais il est possible que la couche supérieure du support, celle qui n'est pas en contact avec l'adhésif, soit rugueuse (brillance inférieure à 70, telle que mesurée selon la norme ASTM2457), pour des besoins techniques particuliers (par exemple, une modification du coefficient de friction).

Les films de « faible » densité, par la présence de gaz à l'intérieur du plastique, peuvent avoir une rugosité conséquente sur chacune de leurs surfaces. Cette rugosité, obtenue sans agents abrasifs, comme des charges minérales, permet de convoyer plus facilement les surfaces protégées sans risque de rayure ou de dégradation des outils de convoyage. Par contre, ces mêmes surfaces, comme elle sont structurées, ne sont jamais enduites d'un adhésif car cela occasionnerait des dépôts inhomogènes et en conséquence des risques de contre-performance des produits adhésivés (dont des résidus de colle sur la surface protégée).

Il a maintenant été découvert, et c'est le fondement de l'invention, qu'il est possible de préparer un film adhésif sensible à la pression par enduction d'une couche support « expansée », de faible densité, avec une colle sensible à la pression.

Ainsi, selon un premier aspect, l'invention concerne un film adhésif sensible à la pression qui comprend un support multicouches enduit sur une seule de ses faces d'une colle sensible à la pression, ledit support comprenant un nombre de couches impair et au moins une couche expansée de polyoléfine dont la couche centrale, ladite polyoléfine étant choisie parmi un polyéthylène basse densité radicalaire, un polyéthylène linéaire, un polypropylène, un copolymère d'éthylène et de propylène, ou un mélange de ces composés, ledit film possédant, après application sur la surface à protéger, une force de décollement dans la gamme de 1 à 700 cN/cm. Par « mélange de ces composés » on entend au sens de la présente invention un mélange de plusieurs polyoléfines du même type, ou d'une ou plusieurs polyoléfine(s) d'un premier type avec une ou plusieurs polyoléfine(s) d'un ou plusieurs autres types.

Avantageusement, le polyéthylène basse densité radicalaire (PEbdr) a une densité, mesurée selon la norme ASTM D1505, comprise dans la gamme allant de 0,910 à 0,930, et un indice de fluidité, mesuré selon la norme ASTM D1238 (190°C/2,16 kg), compris dans la gamme allant de 0,3 à 10 dg/min. Le polyéthylène linéaire (PE linéaire) est un copolymère d'éthylène et d'un monomère oléfinique en C₃-C₈, tel que le propène, le butène, l'hexène, le méthylpentène ou l'octène. Avantageusement, le PE linéaire a une densité, mesurée selon la norme ASTM D1505, comprise dans la gamme allant de 0,858 à 0,961 et un indice de fluidité, mesuré selon la norme ASTM D1238 (190°C/2,16 kg), compris dans la gamme allant de 0,05 à 10 dg/min. Le copolymère d'éthylène et de propylène (EPM) a avantageusement une densité, mesurée selon la norme ASTM D1505, comprise dans la gamme allant de 0,860 à 0,910 et un taux de propylène compris dans la gamme allant de 25 à 60 % en poids.

Le PEbdr, le PE linéaire et l'EPM susmentionnés peuvent être indifféremment de catalyse métallocène ou Ziegler-Natta.

Avantageusement, le polypropylène a une densité, mesurée selon la norme ASTM D1505, comprise dans la gamme allant de 0,860 à 0,920, et un indice de fluidité, mesuré selon la norme ASTM D1238 (230°C/2,16 kg), compris dans la gamme allant de 0,3 à 10 dg/min.

Le support du film adhésif sensible à la pression selon l'invention est du type multicouches, et comprend un nombre impair de couches, avantageusement 3, 5, 7 ou 9 couches.

Une ou plusieurs couches du support est (sont) constituée(s) essentiellement de polyoléfine expansée (et peu(ven)t chacune comprendre un ou plusieurs additifs couramment utilisés dans la fabrication de films adhésifs sensibles à la pression, choisis par exemple parmi les agents matants, en particulier les agents antibloc ; les agents glissants ; les colorants ; les stabilisants UV ; les barrières UV ; les antioxydants ; les agents antivieillissement ; les agents gonflants. Avantageusement le ou les additifs sont choisis parmi les agents antibloc, les colorants, les agents anti-oxydants. Selon l'invention au moins la couche centrale du support est constituée essentiellement de polyoléfine expansée. La (ou les autres) couche(s) du support qui n'est (ne sont) pas expansée(s), est (sont) avantageusement constituée(s) essentiellement (1) d'une polyoléfine, (2) d'un caoutchouc synthétique, (3) d'un copolymère d'éthylène et d'acétate de vinyle, ou d'un mélange de ces composés. L'expression « constituée essentiellement de » employée ici signifie que la couche du support ne comprend pas d'autres constituants susceptibles d'affecter les propriétés mécaniques et adhésives du film de protection. On entend par « mélange de ces composés » un mélange de plusieurs composés du même type [(1), (2) ou (3)], ou d'une ou plusieurs composé(s) d'un premier type avec une ou plusieurs composé(s) d'un ou plusieurs autres types.

La polyoléfine utilisée pour la (les) couches(s) non expansée(s) est avantageusement choisie parmi un polyéthylène (PE) radicalaire, un polyéthylène (PE) linéaire, un polypropylène (PP) ou un copolymère d'éthylène et de propylène (EPM).

Le PE radicalaire a avantageusement une densité, mesurée selon la norme ASTM D1505, comprise dans la gamme allant de 0,910 à 0,930, et un indice de fluidité, mesuré selon la norme ASTM D1238 (190°C/2,16 kg), compris dans la gamme allant de 0,3 à 10 dg/min. Le PE linéaire est un copolymère d'éthylène et d'un monomère oléfinique en C₃-C₈, tel que le propène, le butène, l'hexène, le méthylpentène ou l'octène. Il peut être haute, moyenne, basse ou très basse densité, c'est-à-dire avec une densité, mesurée selon la norme ASTM D1505, comprise dans la gamme allant de 0,858 à 0,961, et un indice de fluidité, mesuré selon la norme ASTM D1238 (190°C/2,16 kg), compris dans la gamme allant de 0,05 à 10 dg/min. Tous les polyéthylènes susmentionnés peuvent être indifféremment de catalyse métallocène ou Ziegler-Natta.

Le PP a une densité, mesurée selon la norme ASTM D1505, avantageusement comprise dans la gamme allant de 0,860 à 0,920, et un indice de fluidité, mesuré selon la norme ASTM D1238 (230°C/2,16 kg), compris dans la gamme allant de 0,3 à 10.

L'EPM a une densité, mesurée selon la norme ASTM D1505, avantageusement comprise dans la gamme allant de 0,860 à 0,910 et un taux de propylène compris dans la gamme allant de 25 à 60 % en poids. Le PP et l'EPM peuvent être indifféremment de catalyse métallocène ou Ziegler-Natta.

Le caoutchouc synthétique susceptible d'être utilisé dans la (les) couches(s) non expansée(s) est avantageusement choisi parmi un copolymère styrène-éthylène-butylène-styrène (SEBS) ; un copolymère styrène-éthylène-propylène-styrène (SEPS) ; un copolymère styrène-isoprène-styrène (SIS) ; un SIS asymétrique, un dérivé vinylique, hydrogéné ou non, de SIS ; un copolymère styrène-isoprène-butadiène-styrène (SIBS) ; un copolymère styrène-isobutylène-styrène (SiBS) ; un copolymère éthylène-styrène (ES) ; et les mélanges de ces copolymères.

Les SEBS, les SEPS, les SIS, les SIBS et les SiBS ont avantageusement un taux de styrène inférieur ou égal à 50 % en poids, de préférence compris dans la gamme allant de 5 à 45 % en poids ; de manière également avantageuse, ces polymères ont un taux de diblocs SEB, SEP, SI, SIB ou SiB inférieur ou égal à 70 % en poids. Les ES ont avantageusement un taux de styrène compris dans la gamme allant de 5 à 85 % en poids, et de préférence un indice de fluidité, mesuré selon la norme ASTM 1238, compris dans la gamme allant de 0,1 à 40 dg/min.

Le copolymère d'éthylène et d'acétate de vinyle (EVA) susceptible d'être utilisé dans la (les) couches(s) non expansée(s) ont avantageusement un taux d'acétate de vinyle inférieur ou égal à 80 % en poids, et un indice de fluidité, mesuré selon la norme ASTM D1238, compris dans la gamme de 0,1 à 40 dg/min.

Chaque couche du support, y compris la couche expansée, peut contenir un ou plusieurs additifs tels que des agents matants, notamment des agents antibloc ; des agents glissants ; des colorants ; des stabilisants UV ; des barrières UV ; des antioxydants ; des agents antivieillissement ; des agents gonflants ; des additifs modifiant le niveau d'adhérence de la couche. Ces additifs, lorsqu'ils sont présents, représentent environ 0,1% à environ 25 % en poids du poids total de chaque couche. Des additifs particulièrement avantageux dans le cadre de la présente invention sont les agents matants, en particulier les agents antibloc ; les agents antioxydants (primaires ou secondaires) ; et les agents antivieillissement.

Parmi les agents matants, on peut citer :
- les agents matants incompatibles avec les PE basse densité, tels que les polyéthylènes greffés acrylique ou les sels de polyéthylène ;
- les agents antibloc, tels que la silice et ses dérivés, le talc et ses dérivés, le mica et ses dérivés, les polyéthylènes linéaires basse densité contenant une charge telle que le carbonate de calcium, le talc, le dioxyde de titane ou un mélange de ces composés.

Parmi les agents gonflants on peut citer les agents endothermiques (par exemple, acide citrique et ses dérivés ou bicarbonate de soude) et les agents exothermiques.

Parmi les agents antivieillissement, on peut citer les amines à encombrement stérique encore appelées HALS (de l'anglais « Hindered Amine Light Stabilizers »).

Il est possible d'utiliser plusieurs additifs du même type.

Le support utilisé dans le cadre de l'invention peut être préparé par extrusion de la ou des couches qui le constitue(nt), en particulier par co-extrusion coulée ou co-extrusion soufflage. Ces techniques sont bien connues de l'homme du métier, et sont décrites par exemple dans l'ouvrage « Encyclopedia of Chemical Technology » (Kirk-Othmer), 1996, volume 19, pages 290-316. La ou les couche(s) expansée(s) du support peu(ven)t notamment être introduite(s) dans le support selon le procédé et à l'aide du dispositif décrits dans la demande WO 2005/007729, dont le contenu est incorporé à la présente demande dans son intégralité. La ou les couche(s) expansée(s) du support peu(ven)t également être formée(s) dans le support par introduction dans la ou les vis d'extrusion, d'un fluide à l'état supercritique. La formation de bulles fines peut être favorisée par l'ajout de charges (notamment des agents antibloc ou des agents gonflants).

Le film adhésif sensible à la pression selon l'invention est obtenu par enduction du support décrit précédemment avec une colle sensible à la pression, notamment une colle de type acrylique, en émulsion ou solvantée ; une colle de type caoutchouc, d'origine naturelle ou synthétique ; ou encore une colle de type polyisobutylène ou EVA. Les techniques bien connues d'enduction sont mises en œuvre dans le cadre de l'invention. Nous pouvons citer à titre d'exemple, sans limitation, les technologies d'enduction par barre filetée (ou Mayer barre), par gravure, directe ou indirecte (rouleau doseur poreux), par rideau.

Selon un mode de réalisation de l'invention, le film adhésif sensible à la pression est obtenu par enduction d'une colle caoutchouc (caoutchouc naturel ou synthétique ou mélange de caoutchouc(s) naturel(s) et/ou synthétique(s)), d'une colle à base d'EVA, ou d'une colle acrylique, sur le support. De manière particulièrement avantageuse, la colle utilisée dans le cadre de l'invention est une colle caoutchouc (naturel ou synthétique) ou une colle acrylique. Selon un mode de réalisation de l'invention, la colle caoutchouc ou la colle acrylique est réticulée.

Une colle caoutchouc susceptible d'être utilisée dans le cadre de l'invention est telle que décrite ci-dessous. De manière particulièrement avantageuse, la colle caoutchouc est obtenue par mélange d'environ 5% à 40% en poids (extrait sec) d'une formulation contenant :
- 100 parties en poids d'un caoutchouc naturel et/ou synthétique, ou d'un mélange de caoutchouc(s) naturel(s) et/ou synthétique(s),
- 0 à 150 parties en poids d'une ou plusieurs résines tackifiantes,
- 0 à 80 parties en poids d'un agent plastifiant,
- 0 à 15 parties en poids, de préférence 0,1 à 10 parties en poids, d'un réticulant, et
- 0 à 5 parties en poids d'un ou plusieurs agent(s) anti- vieillissement,
dans un solvant hydrocarboné tel que le toluène, l'essence, l'hexane ou un mélange de ces solvants.

Lorsque la colle caoutchouc ne contient pas de réticulant, le support est revêtu d'une couche de primaire d'accrochage, typiquement d'une épaisseur d'environ 1 µm, avant l'application de ladite colle.

Le caoutchouc synthétique susceptible d'être utilisé dans la colle caoutchouc est avantageusement choisi parmi un copolymère styrène-éthylène-butylène-styrène (SEBS) ; un copolymère styrène-éthylène-propylène-styrène (SEPS) ; un copolymère styrène-butadiène-styrène (SBS) ; un copolymère styrène-isoprène-styrène (SIS) ; un SIS asymétrique, un dérivé vinylique, hydrogéné ou non, de SIS ; un copolymère styrène-isoprène-butadiène-styrène (SIBS) ; un copolymère styrène-isobutylène-styrène (SiBS) ; un copolymère éthylène-styrène (ES) ; et les mélanges de ces copolymères avec ou sans caoutchouc naturel.

La résine tackifiante susceptible d'être utilisée dans la colle caoutchouc est avantageusement une résine thermoplastique, de faible masse moléculaire, naturelle ou synthétique, ou non hydrogénées, hydrogénées totalement ou partiellement ou en mélange, de préférence en C5 ou C9 ou un mélange de C5/C9.

L'agent plastifiant susceptible d'être utilisé dans la colle caoutchouc est avantageusement une huile plastifiante ou une résine plastifiante de préférence à caractère faiblement polaire, apte à plastifier des élastomères, notamment thermoplastiques. A température ambiante (23°C), ces huiles, plus ou moins visqueuses, sont des liquides. Par exemple, l'huile plastifiante est choisie dans le groupe constitué par les huiles paraffiniques, naphténiques, ou aromatiques.

L'agent antivieillissement susceptible d'être utilisé dans la colle caoutchouc est tel que défini ci-dessus.

Selon un autre mode de réalisation de l'invention, le film adhésif sensible à la pression est obtenu par enduction d'une colle acrylique sur le support.

Une colle acrylique susceptible d'être utilisée dans le cadre de l'invention comprend typiquement :
- 100 parties en poids d'une ou plusieurs dispersion(s) acrylique(s) aqueuse(s) obtenue(s) par polymérisation en émulsion d'un mélange de monomères comprenant :
   - 40 à 100% en poids d'un monomère de basse température de transition vitreuse (Tg ≤ 0°C), choisi avantageusement parmi l'acrylate de 2-éthylhexyle, l'acrylate d'éthyle, l'acrylate de butyle, l'acrylate d'iso-octyle, l'acrylate d'octyle, ou leurs mélanges ;
   - 5 à 45% d'un monomère secondaire, de plus haute température de transition vitreuse (Tg > 0°C), choisi avantageusement parmi l'acrylate de méthyle, le méthacrylate de méthyle, l'acétate de vinyle, l'acétate d'éthyle, le styrène, l'acrylonitrile, ou leurs mélanges ;
   - 2 à 40% en poids de monomère(s) réactif(s) fonctionnalisé(s) choisi(s) avantageusement parmi l'acrylate d'hydroxyéthyle, l'acide acrylique, l'acide méthacrylique, l'acide itaconique, l'acide citraconique, l'acide fumarique, l'acide maléique et les dérivés de ces acides, l'acide acrylique et/ou méthacrylique étant préférés ;
   - 0 à 80 parties en poids, de préférence 15 à 60 parties en poids, d'une résine tackifiante en dispersion ; et
   - un ou plusieurs agents tels que des agents tensioactifs, des agents anti-mousses, etc., pour faciliter la mise en dispersion et l'utilisation de la colle acrylique ;
      la somme des différents constituants de chaque dispersion acrylique étant égale à 100% ;
- 0,05 à 30 parties en poids, de préférence 0,1 à 15 parties en poids, d'un réticulant ; et
- 0 à 5 parties en poids d'un ou plusieurs agent(s) anti-vieillissement.

A titre tout à fait indicatif, on peut citer les colles acryliques décrites dans la demande de brevet WO2005/111101.

Les résines tackifiantes en dispersion susceptibles d'être utilisées dans la colle acrylique sont bien connues de l'homme du métier et peuvent être choisies notamment parmi les résines de colophane, les résines terpène-phénol, et les résines obtenues à partir de nappes pétrolières en C₅, (C₅)₂ et/ou C₉ qui peuvent ensuite être partiellement ou totalement hydrogénées. Ces résines ont avantageusement une température de ramollissement, mesurée selon la méthode bille et anneau (« Ring and Ball » en anglais) (norme ASTM E 28), inférieure ou égale à 140°C, généralement comprise dans la gamme de 75 à 140°C, de préférence dans la gamme de 75 à 125°C. A titre d'exemple, on peut citer les produits commercialisés sous la dénomination Dermulsene® (DRT), Permatac® (DRT) et Tacolyn® (Eastman).

Avantageusement, le réticulant utilisé dans la colle caoutchouc ou la colle acrylique de l'invention est un réticulant isocyanate, notamment un réticulant isocyanate aliphatique ou un réticulant isocyanate alicyclique. A titre d'exemple de réticulant isocyanate aliphatique, on peut citer un diisocyanate aliphatique, comme l'hexaméthylène diisocyanate ; un trimère d'un tel diisocyanate ; un triisocyanate aliphatique ; ainsi qu'un polymère issu de ces monomères homo- ou copolymérisés, ou issu de l'addition d'un polyol ou d'une polyamine avec un ou plusieurs de ces monomères, le polyol ou la polyamine pouvant être un polyéther, un polyester, un polycarbonate, ou un polyacrylate. A titre d'exemple de réticulant isocyanate alicyclique susceptible d'être utilisés dans le cadre de l'invention, on peut citer un diisocyanate alicyclique, comme le 3-isocyanatométhyl-3,5,5-triméthylcyclohexyl isocyanate (plus connu sous le nom d'isophorone diisocyanate ou IPDI) ou le diphénylméthane diisocyanate hydrogéné ; un trimère d'un tel diisocyanate ; un triisocyanate alicyclique ; ainsi qu'un polymère issu de ces monomères homo- ou copolymérisés, ou issu de l'addition d'un polyol ou d'une polyamine avec un ou plusieurs de ces monomères, le polyol ou la polyamine pouvant être un polyéther, un polyester, un polycarbonate, ou un polyacrylate.

D'autres familles de réticulants peuvent également être utilisées de manière avantageuse. A titre d'exemple, nous pouvons citer les polyaziridines, les polycarbodiimides ou encore les sels d'aluminium.

La colle est avantageusement enduite sur le support à raison de 0,5 à 25 g/m², de préférence à raison de 0,5 à 20 g/m², de préférence encore à raison de 0,5 à 16 g/m², par exemple à raison de 3 à 25 g/m², de 3 à 20 g/m² ou encore de 3 à 16 g/m².

Avantageusement, le support est traité plasma ou Corona avant l'application de la colle.

Le film adhésif sensible à la pression ainsi obtenu a une épaisseur généralement comprise entre environ 30 µm et environ 200 µm, de préférence entre environ 20 et environ 100 µm. Le support représente généralement entre 60% et 95% de l'épaisseur totale du film.

Ce film possède, avant application sur une surface à protéger, une force de décollement, mesurée selon la norme AFERA 5001 (pelage à 180° et vitesse de pelage de 300 mm/min), dans la gamme de 0 à 400 cN/cm, de préférence de 0 à 200 cN/cm. Après application sur la surface à protéger, le film de protection possède une force de décollement (mesurée par dynamométrie selon un protocole adapté de la norme AFERA 5001, avec une vitesse de pelage allant de 10 mm/min à 30 000 mm/min) dans la gamme de 1 à 700 cN/cm, de préférence de 1 à 400 cN/cm.

Le film non-enduit possède par ailleurs avantageusement, des deux côtés :
- une rugosité de surface R_{A}, mesurée selon la norme ISO 13565-2, dans la gamme allant de 0,05 à 6 µm, de préférence de 0,1 à 5 µm, de préférence encore de 0,2 à 5 µm, et de manière encore plus préférée de 0,3 à 3 µm ;
- une rugosité Rz dans la gamme allant de 0,1 à 16 µm, de préférence de 0,4 à 12 µm ;
- une périodicité dans la gamme allant de 5 à 200 µm ;
- une résistance à la déchirure dans le sens longitudinal du film (mesurée au moyen d'un déchiromètre ED 30/32 selon la norme NF EN ISO 6383-2) supérieure ou égale à 250 mN, de préférence comprise dans la gamme allant de 250 à 25000 mN.

Le film adhésif sensible à la pression selon l'invention est particulièrement adapté à la protection temporaire de surfaces, notamment la protection temporaire de surfaces métalliques nues ou peintes, de plaques plastiques, de stratifiés, de moquettes, de profilés plastiques, de surfaces plastiques vernies, de verre. Il présente en effet notamment les avantages techniques suivants :
- il est écologique (moindre masse de matière pour une même épaisseur et possibilité de déposer moins d'adhésif pour une adhérence similaire aux films habituels) ;
- il adhère mieux sur la surface à protéger, par les différentiels de dépôt générés par la rugosité du support (le dépôt en un point peut être supérieur au dépôt moyen, et de fait, l'adhérence est supérieure) ;
- il se déroule à moindre force et à moindre bruit par rapport à des produits de même épaisseur et de même masse adhésive ;
- il permet, par sa rugosité naturelle, un meilleur glissant lorsqu'il est nécessaire de séparer deux plaques industrielles, protégées de chaque côté, et empilées l'une sur l'autre, et ceci sans l'utilisation de charges minérales abrasives.

L'invention est illustrée par les exemples ci-après, donnés à titre purement indicatif.

### Exemple 1 : film adhésif composé d'un support tricouche enduit caoutchouc

On a préparé un film adhésif d'épaisseur 80 µm de la manière suivante. Dans un premier temps un film support a été fabriqué à l'aide d'un équipement de co-extrusion trois couches, par soufflage (blown). On a ainsi introduit :
- dans l'extrudeuse n°1, un mélange 98/2 en poids de polyéthylène radicalaire de densité 0,924 et d'indice de fluidité 0,7 et d'un mélange maître antibloquant ABPE 50N (Polytechs) ;
- dans l'extrudeuse n°2, un mélange 70/14/15/1 en poids de polyéthylène radicalaire de densité 0,924 et d'indice de fluidité 0,7, d'un agent colorant blanc (TiO₂), le CL8000 (A. Schulman), d'un agent antibloc, le ME50024 (Multibase) et d'anti-oxydant Polybatch UV1952 (A. Schulman) ; cette couche intermédiaire a été expansée à 64% par injection d'azote à l'état de fluide supercritique dans le mélange; et
- dans l'extrudeuse n°3, un mélange 84/12/2 en poids de polyéthylène radicalaire de densité 0,924 et d'indice de fluidité 0,7, d'un agent colorant noir (Noir de carbone), le 1423HF1 (A. Schulman), et d'un mélange maître antibloquant ABPE 50N (Polytechs).

Un agent d'aide à l'extrusion, le mélange maître « processing aids » POLYBATCH® NATURAL AMF 705 HF (A. Schulman), a été utilisé pour faciliter l'extrusion.

Le film extrudé ainsi obtenu présente une épaisseur de 75 microns pour un grammage total de 55 g/m². La surface destinée à être en contact avec la couche adhésive a ensuite été traitée Corona.

Le film extrudé possède, sur le côté non traité Corona, un Ra de 2,3 µm (+/-0,10 µm) et un Rz de 12 µm (+/- 0,6 µm) mesurés à l'aide d'un rugosimètre HOMMEL TESTER T1000.

Une composition adhésive a par ailleurs été préparée en mélangeant dans l'essence :
- 100 parties en poids de caoutchouc naturel SMR (« standard Malaysian rubber ») CV50,
- 120 parties en poids de résine tackifiante Wingtack 86 (Cray Valley),
- 3 parties en poids d'agent anti-oxydant Irganox 1010 (Ciba),
- 1,5 parties en poids d'agent anti-vieillissement Tinuvin 770DF (BASF),
- 7 parties en poids de réticulant Desmodur N3600 (Bayer).

La composition adhésive a été enduite sur le film support dans les conditions normales connues de l'homme du métier, de manière à obtenir un dépôt sec de 5 g/m², équivalent à une épaisseur de 5 microns.

### Exemple comparatif 1 : film adhésif composé d'un support tricouche enduit caoutchouc

On a répété le protocole de l'exemple 1 mais sans expansion de la couche intermédiaire provenant de l'extrudeuse n°2. Le film non-enduit présente une épaisseur de 55 microns.

### Propriétés des films

Les caractéristiques des films non-enduits de l'exemple 1 et de l'exemple comparatif 1 sont présentées dans le tableau 1. Les propriétés mécaniques ont été mesurées à l'aide d'un appareillage Instron. La résistance à la déchirure amorcée a été mesurée à l'aide d'un déchiromètre ED 30/32 (TMI) selon la norme NF EN ISO 6383-2. L'allongement à la rupture, la force à la rupture et la résistance à la déchirure ont été mesurées dans le sens longitudinal et dans le sens transversal du film.

**Tableau 1**

| | | Ex.1 (75 µm) | Ex. Comp.1 (55 µm) |
|---|---|---|---|
| Allongement à la rupture (%) | Long | 200 | 320 |
| | Trans | 500 | 410 |
| Force à la rupture (daN/cm) | Long | 0,6 | 0,7 |
| | Trans | 0,5 | 0,6 |
| Résistance à la déchirure (mN) | Long | 620 | 1775 |
| | Trans | 4700 | 3950 |

Le film adhésif sensible à la pression de l'exemple 1 possède en outre une force de décollement initiale de 70 cN/cm (mesure par dynamomètre de type Instron à 300 mm/min et 180°, protocole adapté de la norme AFERA 5001). Cette force de décollement est supérieure à celle du film adhésif de l'exemple comparatif 1, qui possède une force de décollement initiale de 50 cN/cm (mesure par dynamomètre de type Instron à 300 mm/min et 180°, protocole adapté de la norme AFERA 5001).

### Exemple 2 : film adhésif composés d'un support tricouche enduit caoutchouc

On a préparé un film adhésif d'épaisseur 70 µm de la manière suivante. Dans un premier temps un film support a été fabriqué à l'aide d'un équipement de co-extrusion trois couches, par soufflage (blown). On a ainsi introduit :
- dans l'extrudeuse n°1, un mélange 98/2 en poids de polyéthylène linéaire C8 de densité 0,919 et d'indice de fluidité 1,1 et d'un mélange maître antibloquant ABPE 50N (Polytechs) ;
- dans l'extrudeuse n°2, un mélange 75/14/10/1 en poids de polyéthylène radicalaire de densité 0,924 et d'indice de fluidité 0,7, d'un agent colorant blanc (TiO₂), le CL8000 (A. Schulman), d'un agent antibloc, le ME50024 (Multibase) et d'anti-oxydant Polybatch UV1952 (A. Schulman) ; cette couche intermédiaire a été expansée à 40% par injection d'azote à l'état de fluide supercritique dans le mélange; et
- dans l'extrudeuse n°3, un mélange 84/12/2 en poids de polyéthylène linéaire C8 de densité 0,919 et d'indice de fluidité 1,1, d'un agent colorant noir (Noir de carbone), le 1423HF1 (A. Schulman), et d'un mélange maître antibloquant ABPE 50N (Polytechs).

Un agent d'aide à l'extrusion, le mélange maître « processing aids » POLYBATCH® NATURAL AMF 705 HF (A. Schulman), a été utilisé pour faciliter l'extrusion.

Le film extrudé ainsi obtenu présente une épaisseur de 65 microns pour un grammage total de 52 g/m². La surface destinée à être en contact avec la couche adhésive a ensuite été traitée Corona. Une composition de vernis « release » polyvinyl octadécyl carbamate a été enduite sur la seconde face du film support, préalablement traitée Corona, dans les conditions normales connues de l'homme du métier, de manière à obtenir une couche monomoléculaire.

Le film extrudé possède, sur le côté qui va être enduit de vernis, un Ra de 2.4 µm (+/- 0,10 µm) et un Rz de 16 µm (+/- 0,5 µm) mesurés à l'aide d'un rugosimètre HOMMEL TESTER T1000.

Une composition adhésive a par ailleurs été préparée en mélangeant dans l'essence :
- 100 parties en poids de caoutchouc naturel SMR (« standard Malaysian rubber ») CV50,
- 120 parties en poids de résine tackifiante Wingtack 86 (Cray Valley),
- 3 parties en poids d'agent anti-oxydant Irganox 1010 (Ciba),
- 1,5 parties en poids d'agent anti-vieillissement Tinuvin 770DF (BASF),
- 7 parties en poids de réticulant Desmodur N3600 (Bayer).

La composition adhésive a été enduite sur le film support dans les conditions normales connues de l'homme du métier, de manière à obtenir un dépôt sec de 5 g/m², équivalent à une épaisseur de 5 microns.

### Exemple Comparatif 2

On a répété le protocole de l'exemple 2 mais sans expansion de la couche intermédiaire provenant de l'extrudeuse n°2 et en remplaçant le polyéthylène linéaire par du polyéthylène radicalaire de densité 0,924 et d'indice de fluidité 0,7 dans les couches externes provenant des extrudeuses n°1 et n°3. Le film non-enduit présente une épaisseur de 65 microns (pour un grammage total de 65g/m²).

### Propriétés des films

La résistance à la déchirure amorcée des films non-enduits de l'exemple 2 et de l'exemple comparatif 2, mesurée dans le sens longitudinal et dans le sens transversal à l'aide d'un déchiromètre ED 30/32 (TMI) selon la norme NF EN ISO 6383-2, est présentée dans le tableau 2.

**Tableau 2**

| | | Ex. 2 (65 µm) | Ex. Comp.2 (65 µm) |
|---|---|---|---|
| Résistance à la déchirure (mN) | Long | 4000 | 250 |
| | Trans | 14400 | 3700 |

Le film adhésif sensible à la pression de l'exemple 2 possède en outre une force de décollement initiale de 68 cN/cm (mesure par dynamomètre de type Instron à 300 mm/min et 180°, protocole adapté de la norme AFERA 5001), très proche de celle du film de l'exemple 1.

### Exemple 3 : film adhésif composé d'un support tricouche enduit acrylique

On a préparé un film adhésif d'épaisseur 107 µm de la manière suivante. Dans un premier temps, un film support a été fabriqué à l'aide d'un équipement de coextrusion trois couches, par soufflage (blown). On a ainsi introduit :
- dans l'extrudeuse n°1, un mélange 98/2 en poids d'un polyéthylène radicalaire de densité 0,924 et d'indice de fluidité 0,7 et d'un mélange maître antibloquant ABPE 50N (Polytechs) ;
- dans l'extrudeuse n°2, un mélange 63/20/14/2/1 en poids de polyéthylène radicalaire de densité 0,924 et d'indice de fluidité 0,7, de polyéthylène linéaire (co-monomère : butène) de densité 0,918 et d'indice de fluidité 1, d'un agent colorant blanc (TiO₂), le CL8000 (A. Schulman), d'un agent gonflant, l'hydrocérol CF5E (Clariant) et d'anti-oxydant Polybatch UV1952 (A. Schulman) ; cette couche intermédiaire a été expansée à 27% par injection d'azote à l'état de fluide supercritique dans le mélange ; et
- dans l'extrudeuse n°3, un mélange 97/2/1 en poids de polyéthylène radicalaire de densité 0,924 et d'indice de fluidité 0,7, d'un mélange maître antibloquant ABPE 50N (Polytechs), et d'anti-oxydant Polybatch UV1952 (A. Schulman).

Un agent d'aide à l'extrusion, le mélange maître « processing aids » POLYBATCH® NATURAL AMF 705 HF (A. Schulman), a été utilisé pour faciliter l'extrusion.

Le film extrudé ainsi obtenu présente une épaisseur de 87 microns pour un grammage total de 75 g/m². La surface destinée à être en contact avec la couche adhésive a ensuite été traitée Corona.

Le film extrudé possède, sur le côté non traité Corona, un Ra de 1,9 µm (+/-0,2 µm) et un Rz de 10 µm (+/- 0,5 µm) mesurés à l'aide d'un rugosimètre HOMMEL TESTER T1000.

Une composition adhésive a par ailleurs été préparée en mélangeant :
- 100 parties en poids de dispersion acrylique (Acronal® DS3559), et
- 3 parties en poids de réticulant isocyanate (Vestanat® IPDI (Degussa)), de sorte à obtenir un extrait sec de 50% pour la composition.

Le réticulant isocyanate a été introduit dans la dispersion sous forme de prémélange à 25% dans l'acétate d'éthyle.

La composition adhésive a été enduite sur le film support dans les conditions normales connues de l'homme du métier, de manière à obtenir un dépôt sec de 20 g/m², équivalent à une épaisseur de 20 microns.

### Exemple 4 : film adhésif composé d'un support tricouche enduit acrylique

On a répété le protocole de l'exemple 3 en utilisant, dans l'extrudeuse n°2, un mélange 75/14/10/1 en poids de polyéthylène radicalaire de densité 0,924 et d'indice de fluidité 0,7, d'un agent colorant blanc (TiO₂), le CL8000 (A. Schulman), d'un agent antibloc, le ME50024 (Multibase) et d'anti-oxydant Polybatch UV1952 (A. Schulman).

Le film non-enduit présente une épaisseur de 87 microns pour un grammage total de 75 g/m². La surface destinée à être en contact avec la couche adhésive a ensuite été traitée Corona. Le film extrudé possède également, sur le côté non traité Corona, un Ra de 1,8 µm (+/- 0,2 µm) et un Rz de 9,5 µm (+/- 0,5 µm) mesurés à l'aide d'un rugosimètre HOMMEL TESTER T1000.

### Propriétés des films

La résistance à la déchirure amorcée des films non-enduits des exemples 3 et 4, mesurée dans le sens longitudinal et dans le sens transversal à l'aide d'un déchiromètre ED 30/32 (TMI) selon la norme NF EN ISO 6383-2, est présentée dans le tableau 3.

**Tableau 3**

| | | Ex. 3 (87 µm) | Ex. 4 (87 µm) |
|---|---|---|---|
| Résistance à la déchirure (mN) | Long | 890 | 906 |
| | Trans | 4800 | 4788 |

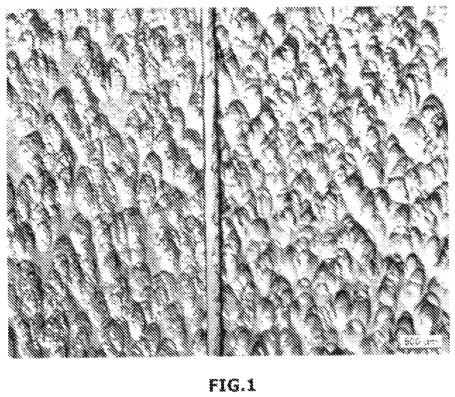

La taille et la forme des bulles ont également été observées à la loupe binoculaire et les résultats obtenus sont très proches comme on peut le constater sur la figure 1 (la partie droite représente le film de l'exemple 3, la partie gauche celui de l'exemple 4).

Les films adhésifs sensibles à la pression des exemples 3 et 4, appliqués sur une plaque automobile prélaquée de type polyuréthane, présentent, une heure après avoir été appliqués, un niveau adhésif mesuré par une force de décollement (mesure par dynamomètre de type Instron à 300 mm/min et 180°, mesure adaptée de la norme AFERA 5001)) d'environ 215 cN/cm.

### Exemple 5 : film adhésif composé d'un support tricouche enduit acrylique

On a préparé un film adhésif d'épaisseur 74 µm de la manière suivante. Dans un premier temps, un film support a été fabriqué à l'aide d'un équipement de coextrusion trois couches, par soufflage (blown). On a ainsi introduit :
- dans l'extrudeuse n°1, un polyéthylène linéaire C8 de densité 0,919 et d'indice de fluidité 1,1,
- dans l'extrudeuse n°2, un mélange 70/19/15/1 en poids de polyéthylène linéaire de densité 0,924 et d'indice de fluidité 1, de polyéthylène linéaire (co-monomère : butène) de densité 0,918 et d'indice de fluidité 1, d'agent nucléant, le ME50024 (Multibase), et d'anti-oxydant Polybatch UV1952 (Schulman) ; cette couche intermédiaire a été expansée à 16% par injection d'azote à l'état de fluide supercritique dans le mélange ; et
- dans l'extrudeuse n°3 un polyéthylène radicalaire de densité 0,924 et d'indice de fluidité 1.

Un agent d'aide à l'extrusion, le mélange maître « processing aids » POLYBATCH® NATURAL AMF 705 HF (A. Schulman), a été utilisé pour faciliter l'extrusion.

Le film extrudé ainsi obtenu présente une épaisseur de 70 microns. La surface destinée à être en contact avec la couche adhésive a ensuite été traitée Corona.

Une composition adhésive a par ailleurs été préparée en mélangeant :
- 100 parties en poids de dispersion acrylique (Acronal® DS3559), et
- 6 parties en poids de réticulant isocyanate (Vestanat® IPDI (Degussa)), de sorte à obtenir un extrait sec de 50% pour la composition.

Le réticulant isocyanate a été introduit dans la dispersion sous forme de prémélange à 25% dans l'acétate d'éthyle.

La composition adhésive a été enduite sur le film support dans les conditions normales connues de l'homme du métier, de manière à obtenir un dépôt sec de 4 g/m², équivalent à une épaisseur de 4 microns.

### Exemples 6 et 7 : films adhésifs composés d'un support tricouche enduit acrylique

On a préparé des films adhésifs d'épaisseur 74 µm de la manière suivante. Dans un premier temps, un film support a été fabriqué à l'aide d'un équipement de coextrusion trois couches, par soufflage (blown). On a ainsi introduit :
- dans l'extrudeuse n°1, un polyéthylène linéaire C8 de densité 0,919 et d'indice de fluidité 1,1,
- dans l'extrudeuse n°2, un mélange 70/19/15/1 en poids de polyéthylène linéaire de densité 0,924 et d'indice de fluidité 1, de polyéthylène linéaire (co-monomère : butène) de densité 0,918 et d'indice de fluidité 1, d'agent nucléant le ME50024 (Multibase) et d'anti-oxydant Polybatch UV1952 (Schulman) ; cette couche intermédiaire a été expansée à 34% et 54% par injection d'azote à l'état de fluide supercritique dans le mélange ; et
- dans l'extrudeuse n°3 un polyéthylène linéaire C8 de densité 0,919 et d'indice de fluidité 1,1.

Un agent d'aide à l'extrusion, le mélange maître « processing aids » POLYBATCH® NATURAL AMF 705 HF (A. Schulman), a été utilisé pour faciliter l'extrusion.

Les films extrudés ainsi obtenus présentent une épaisseur de 70 microns. La surface destinée à être en contact avec la couche adhésive a ensuite été traitée Corona.

Une composition adhésive a par ailleurs été préparée en mélangeant :
- 100 parties en poids de dispersion acrylique (Acronal® DS3559), et
- 6 parties en poids de réticulant isocyanate (Vestanat® IPDI (Degussa)), de sorte à obtenir un extrait sec de 50% pour la composition.

Le réticulant isocyanate a été introduit dans la dispersion sous forme de prémélange à 25% dans l'acétate d'éthyle.

La composition adhésive a été enduite sur les films supports dans les conditions normales connues de l'homme du métier, de manière à obtenir un dépôt sec de 4 g/m², équivalent à une épaisseur de 4 microns.

### Propriétés des films

Les caractéristiques des films non-enduits des exemples 5 à 7 sont présentées dans le tableau 4. Les propriétés mécaniques ont été mesurées à l'aide d'un appareillage Instron. La résistance à la déchirure amorcée a été mesurée à l'aide d'un déchiromètre ED 30 / 32 (TMI) selon la norme NF EN ISO 6383-2. L'allongement à la rupture, la force à la rupture et la résistance à la déchirure ont été mesurées dans le sens longitudinal et dans le sens transversal des films. La rugosité des films a été mesurée à l'aide d'un rugosimètre HOMMEL TESTER T1000.

**Tableau 4**

| | | Ex. 5 (70 µm) | Ex. 6 (70 µm) | Ex. 7 (70 µm) |
|---|---|---|---|---|
| Rz* (µm) | | 6 | 13 | 18 |
| Résistance à la déchirure (mN) | Long | 3500 | 5100 | 3000 |
| | Trans | 7300 | 16000 | 11700 |
| Allongement Rupture (%) | Long | 230 | 270 | 200 |
| | Trans | 240 | 215 | 150 |
| Force à la rupture (daN/cm) | Long | 0,7 | 0,4 | 0,4 |
| | Trans | 0,4 | 0,3 | 0,2 |

| | | | | |
|---|---|---|---|---|
| * mesuré sur le côté non traité Corona | | | | |

Les films adhésifs sensibles à la pression des exemples 5 à 7, appliqués sur une plaque polycarbonate structurée, présentent, une heure après avoir été appliqués, des niveaux adhésifs, mesurés par une force de décollement (mesure par dynamomètre de type Instron à 300 mm/min et 180°, mesure adaptée de la norme AFERA 5001)) d'environ 130cN/cm.

### Exemple 8 : film adhésif composé d'un support tricouche enduit caoutchouc

On a préparé un film adhésif d'épaisseur 110 µm de la manière suivante. Dans un premier temps un film support a été fabriqué à l'aide d'un équipement de co-extrusion trois couches, par soufflage (blown). On a ainsi introduit :
- dans l'extrudeuse n°1, un mélange 98/2 en poids de polyéthylène radicalaire de densité 0,924 et d'indice de fluidité 0,7 et d'un mélange maître antibloquant ABPE 50N (Polytechs) ;
- dans l'extrudeuse n°2, un mélange 85/14/1 en poids de polyéthylène radicalaire de densité 0,924 et d'indice de fluidité 0,7, d'un agent colorant blanc (TiO₂), le CL8000 (A. Schulman), et d'anti-oxydant Polybatch UV1952 (A. Schulman) ; cette couche intermédiaire a été expansée à 50% par injection d'azote à l'état de fluide supercritique dans le mélange; et
- dans l'extrudeuse n°3, un mélange 84/12/2 en poids de polyéthylène radicalaire de densité 0,924 et d'indice de fluidité 0,7, d'un agent colorant noir (Noir de carbone), le 1423HF1 (A. Schulman), et d'un mélange maître antibloquant ABPE 50N (Polytechs).

Un agent d'aide à l'extrusion, le mélange maître « processing aids » POLYBATCH® NATURAL AMF 705 HF (A. Schulman), a été utilisé pour faciliter l'extrusion.

Le film extrudé ainsi obtenu présente une épaisseur de 98 microns pour un grammage total de 75 g/m². La surface destinée à être en contact avec la couche adhésive a ensuite été traitée Corona. Une composition de vernis « release » polyvinyl octadécyl carbamate a été enduite sur la seconde face du film support, préalablement traitée Corona, dans les conditions normales connues de l'homme du métier, de manière à obtenir une couche monomoléculaire.

Le film extrudé possède, sur le côté qui va être enduit de vernis, un Ra de 1,7 µm (+/- 0,10 µm) et un Rz de 8,8 µm (+/- 0,6 µm) mesurés à l'aide d'un rugosimètre HOMMEL TESTER T1000.

Une composition adhésive a par ailleurs été préparée en mélangeant dans l'essence :
- 100 parties en poids de caoutchouc naturel SMR (« standard Malaysian rubber ») CV50,
- 120 parties en poids de résine tackifiante Wingtack 86 (Cray Valley),
- 3 parties en poids d'agent anti-oxydant Irganox 1010 (Ciba),
- 1,5 parties en poids d'agent anti-vieillissement Tinuvin 770DF (BASF),
- 7 parties en poids de réticulant Desmodur N3600 (Bayer).

La composition adhésive a été enduite sur le film support dans les conditions normales connues de l'homme du métier, de manière à obtenir un dépôt sec de 12 g/m², équivalent à une épaisseur de 12 microns.

### Exemples comparatifs 3 et 4 : films adhésifs composés d'un support tricouche enduit caoutchouc

On a répété le protocole de l'exemple 8 mais sans expansion de la couche intermédiaire provenant de l'extrudeuse n°2. Les films non-enduits présentaient une épaisseur respective de 98 microns (ex. comp.3) et 68 microns (ex. comp.4).

### Propriétés des films

Les caractéristiques des films de l'exemple 8 et des exemples comparatifs 3 et 4 sont présentées dans le tableau 5. Les propriétés mécaniques ont été mesurées à l'aide d'un appareillage Instron. La résistance à la déchirure amorcée a été mesurée à l'aide d'un déchiromètre ED 30 / 32 (TMI) selon la norme NF EN ISO 6383-2. L'allongement à la rupture, la force à la rupture et la résistance à la déchirure ont été mesurées dans le sens longitudinal et dans le sens transversal du film.

**Tableau 5**

| | | Ex.8 (98 µm) | Ex. Comp.3 (98 µm) | Ex. Comp.4 (68 µm) |
|---|---|---|---|---|
| Allongement à la rupture (%) | Long | 360 | 632 | 234 |
| | Trans | 300 | 462 | 477 |
| Force à la rupture (daN/cm) | Long | 0,92 | 2,27 | 1,37 |
| | Trans | 0,75 | 2,31 | 1,11 |
| Module dYoung (N/mm²) | | 162 | 224 | 159 |
| Résistance à la déchirure (mN) | Long | 3500 | 3351 | 3289 |
| | Trans | 20000 | 6907 | 5671 |

On constate que les propriétés mécaniques du film de l'invention ne sont pas dégradées et sont intermédiaires à celles des films des exemples comparatifs 3 et 4.

Le film adhésif sensible à la pression de l'exemple 8 possède en outre une force de décollement initiale et après vieillissement en étuve pendant 20 min à 100°C de 191 cN/cm (mesure par dynamomètre de type Instron à 300 mm/min et 180°, protocole adapté de la norme AFERA 5001). Cette force de décollement est supérieure à celle du film adhésif de l'exemple comparatif 3, qui possède une force de décollement initiale de 156 cN/cm (mesure par dynamomètre de type Instron à 300 mm/min et 180°, protocole adapté de la norme AFERA 5001).

La mesure de bruit mesurée à 150 m/min à l'aide d'un sonomètre CIRRUS Optimus CR 162C est améliorée : on mesure 101 dB (bobine de 2000mm de laize) pour le film adhésif de l'exemple 8 alors que le bruit de la bobine témoin (exemple comparatif 3) est mesuré à plus de 105 dB.

La force de déroulement est également améliorée : à 150 m/min, on mesure une force de 68 cN/cm (exemple 8) contre 98cN/cm pour la bobine témoin (exemple comparatif 3).

### Exemple 9 : film adhésif composé d'un support tricouche enduit acrylique

On a préparé un film adhésif d'épaisseur 118 µm de la manière suivante. Dans un premier temps, un film support a été fabriqué à l'aide d'un équipement de coextrusion trois couches, par soufflage (blown). On a ainsi introduit :
- dans l'extrudeuse n°1, un mélange 98/2 en poids d'un polyéthylène radicalaire de densité 0,924 et d'indice de fluidité 0,7 et d'un mélange maître antibloquant ABPE 50N (Polytechs) ;
- dans l'extrudeuse n°2, un mélange 65/20/14/1 en poids de polyéthylène radicalaire de densité 0,924 et d'indice de fluidité 0,7, de polyéthylène linéaire (co-monomère : butène) de densité 0,918 et d'indice de fluidité 1, d'un agent colorant blanc (TiO₂), le CL8000 (A. Schulman), et d'anti-oxydant Polybatch UV1952 (A. Schulman) ; cette couche intermédiaire a été expansée à 50% par injection d'azote à l'état de fluide supercritique dans le mélange ; et
- dans l'extrudeuse n°3, un mélange 97/2/1 en poids de polyéthylène radicalaire de densité 0,924 et d'indice de fluidité 0,7, d'un mélange maître antibloquant ABPE 50N (Polytechs), et d'anti-oxydant Polybatch UV1952 (A. Schulman).

Un agent d'aide à l'extrusion, le mélange maître « processing aids » POLYBATCH® NATURAL AMF 705 HF (A. Schulman), a été utilisé pour faciliter l'extrusion.

Le film extrudé ainsi obtenu présente une épaisseur de 98 microns pour un grammage total de 75 g/m². La surface destinée à être en contact avec la couche adhésive a ensuite été traitée Corona.

Le film extrudé possède, sur le côté non traité Corona, un Ra de 2 µm (+/- 0,2 µm) et un Rz de 10 µm (+/- 0,8 µm) mesurés à l'aide d'un rugosimètre HOMMEL TESTER T1000.

Les caractéristiques de ce film sont très proches de celles du film de l'exemple 8, comme on peut le constater à la lecture du tableau 6 ci-dessous.

**Tableau 6**

| | | Ex.9 (98 µm) |
|---|---|---|
| Allongement à la rupture (%) | Long | 546 |
| | Trans | 444 |
| Force à la rupture (daN/cm) | Long | 1,54 |
| | Trans | 0,72 |
| Module d'Young (N/mm²) | | 158 |
| Résistance à la déchirure (mN) | Long | 1195 |
| | Trans | 21162 |

Une composition adhésive a par ailleurs été préparée en mélangeant :
- 100 parties en poids de dispersion acrylique (Acronal® DS3559), et
- 3 parties en poids de réticulant isocyanate (Vestanat® IPDI (Degussa)), de sorte à obtenir un extrait sec de 50% pour la composition.

Le réticulant isocyanate a été introduit dans la dispersion sous forme de prémélange à 25% dans l'acétate d'éthyle.

La composition adhésive a été enduite sur le film support dans les conditions normales connues de l'homme du métier, de manière à obtenir un dépôt sec de 20 g/m², équivalent à une épaisseur de 20 microns.

Le film adhésif sensible à la pression ainsi obtenu, appliqué sur une plaque automobile prélaquée de type polyuréthane, présente, une heure après avoir été appliqué, un niveau adhésif mesuré par une force de décollement (mesure par dynamomètre de type Instron à 300 mm/min et 180°, mesure adaptée de la norme AFERA 5001)) d'environ 220 cN/cm.

### Exemple 10 : film adhésif composé d'un support tricouche enduit acrylique

On a préparé un film adhésif d'épaisseur 80 µm de la manière suivante. Dans un premier temps, un film support a été fabriqué à l'aide d'un équipement de coextrusion trois couches, par soufflage (blown). On a ainsi introduit :
- dans l'extrudeuse n°1, un polyéthylène radicalaire de densité 0,924 et d'indice de fluidité 1 ;
- dans l'extrudeuse n°2, un mélange 80/19/1 en poids de polyéthylène radicalaire de densité 0,924 et d'indice de fluidité 1, de polyéthylène linéaire (co-monomère : butène) de densité 0,918 et d'indice de fluidité 1, et d'anti-oxydant Polybatch UV1952 (Schulman) ; cette couche intermédiaire a été expansée à 50% par injection d'azote à l'état de fluide supercritique dans le mélange ; et
- dans l'extrudeuse n°3 un polyéthylène radicalaire de densité 0,924 et d'indice de fluidité 1.

Un agent d'aide à l'extrusion, le mélange maître « processing aids » POLYBATCH® NATURAL AMF 705 HF (A. Schulman), a été utilisé pour faciliter l'extrusion.

Le film extrudé ainsi obtenu présente une épaisseur de 76 microns pour un grammage total de 58 g/m². La surface destinée à être en contact avec la couche adhésive a ensuite été traitée Corona.

Le film extrudé possède, sur le côté non traité Corona, un Ra de 1,5 µm (+/-0,15 µm) et un Rz de 8 µm (+/- 0,8 µm) mesurés à l'aide d'un rugosimètre HOMMEL TESTER T1000.

Les caractéristiques de ce film sont les suivantes :
- Allongement à la rupture (%) : Sens long > 150%, sens trans > 200% ;
- Force de rupture (daN/cm) : sens long >0,7, sens trans > 0,5.

Une composition adhésive a par ailleurs été préparée en mélangeant :
- 100 parties en poids de dispersion acrylique (Acronal® DS3559), et
- 6 parties en poids de réticulant isocyanate (Vestanat® IPDI (Degussa)), de sorte à obtenir un extrait sec de 50% pour la composition.

Le réticulant isocyanate a été introduit dans la dispersion sous forme de prémélange à 25% dans l'acétate d'éthyle.

La composition adhésive a été enduite sur le film support dans les conditions normales connues de l'homme du métier, de manière à obtenir un dépôt sec de 4 g/m², équivalent à une épaisseur de 4 microns.

Le film adhésif sensible à la pression ainsi obtenu, appliqué sur une plaque polycarbonate structurée, présente, une heure après avoir été appliqué, un niveau adhésif mesuré par une force de décollement (mesure par dynamomètre de type Instron à 300 mm/min et 180°, mesure adaptée de la norme AFERA 5001)) d'environ 130 cN/cm.

## Revendications

1. Film adhésif sensible à la pression pour la protection temporaire de surfaces, qui comprend un support multicouches enduit sur une seule de ses faces d'une colle sensible à la pression, ledit support comprenant un nombre de couches impair et au moins une couche expansée de polyoléfine dont la couche centrale, ladite polyoléfine étant choisie parmi un polyéthylène basse densité radicalaire, un polyéthylène linéaire, un polypropylène, un copolymère d'éthylène et de propylène, ou un mélange de ces composés, ladite couche expansée comprenant un ou plusieurs additifs choisis parmi les agents matants, en particulier les agents antibloc ; les agents glissants ; les colorants ; les stabilisants UV ; les barrières UV ; les antioxydants ; les agents antivieillissement ;
ledit film possédant, après application sur la surface à protéger, une force de décollement (mesurée par dynamométrie selon un protocole adapté de la norme AFERA 5001, avec une vitesse de pelage allant de 10 mm/min à 30 000 mm/min) dans la gamme de 1 à 700 cN/cm, de préférence de 1 à 400 cN/cm.

2. Film adhésif sensible à la pression selon la revendication 1, dans lequel le polyéthylène basse densité radicalaire a une densité comprise dans la gamme allant de 0,910 à 0,930, et un indice de fluidité compris dans la gamme allant de 0,3 à 10 dg/min ; le polyéthylène linéaire a une densité comprise dans la gamme allant de 0,858 à 0,961 et un indice de fluidité compris dans la gamme allant de 0,05 à 10 dg/min ; le polypropylène a une densité comprise dans la gamme allant de 0,860 à 0,920, et un indice de fluidité compris dans la gamme allant de 0,3 à 10 dg/min ; et le copolymère d'éthylène et de propylène a une densité comprise dans la gamme allant de 0,860 à 0,910 et un taux de propylène compris dans la gamme allant de 25 à 60 % en poids.

3. Film adhésif sensible à la pression selon la revendication 1 ou 2, dans lequel la couche expansée comprend un ou plusieurs additifs choisis parmi les agents antibloc, les colorants, les agents anti-oxydants.

4. Film adhésif sensible à la pression selon l'une des revendications 1 à 3, dans lequel le support comprend 3, 5, 7 ou 9 couches.

5. Film adhésif sensible à la pression selon l'une des revendications 1 à 4, dans lequel la (ou les) couche(s) du support qui n'est (ne sont) pas expansée(s), est (sont) constituée(s) essentiellement d'une polyoléfine, d'un caoutchouc synthétique, d'un copolymère d'éthylène et d'acétate de vinyle, ou d'un mélange de ces composés.

6. Film adhésif sensible à la pression selon la revendication 5 dans lequel la (ou les) couche(s) du support qui n'est (ne sont) pas expansée(s), est (sont) constituée(s) essentiellement d'une polyoléfine choisie parmi un polyéthylène radicalaire de densité comprise dans la gamme allant de 0,910 à 0,930, et d'indice de fluidité compris dans la gamme allant de 0,3 à 10 dg/min ; un polyéthylène linéaire de densité comprise dans la gamme allant de 0,858 à 0,961, et d'indice de fluidité compris dans la gamme allant de 0,05 à 10 dg/min ; un polypropylène de densité comprise dans la gamme allant de 0,860 à 0,920 et d'indice de fluidité compris dans la gamme allant de 0,3 à 10 dg/min ; un copolymère d'éthylène et de propylène de densité comprise dans la gamme allant de 0,860 à 0,910 et ayant un taux de propylène compris dans la gamme allant de 25 à 60 % en poids ; ou un mélange de ces composés.

7. Film adhésif sensible à la pression selon l'une des revendications 1 à 6, dans lequel la colle sensible à la pression est une colle acrylique ou une colle caoutchouc.

8. Film adhésif sensible à la pression selon la revendication 7, dans laquelle la colle est réticulée.

9. Film adhésif sensible à la pression selon l'une des revendications 1 à 8, dans lequel la colle est enduite sur le support à raison de 0,5 à 25 g/m², de préférence à raison de 0,5 à 20 g/m², de préférence encore à raison de 0,5 à 16 g/m².

10. Film adhésif sensible à la pression selon l'une des revendications 1 à 9, dans lequel le support est traité plasma ou Corona avant l'application de la colle.

11. Film adhésif sensible à la pression selon l'une des revendications 1 à 10, dont le support possède des deux côtés une rugosité de surface R_{A} dans la gamme allant de 0,05 à 6 µm.

12. Film adhésif sensible à la pression selon l'une des revendications 1 à 11, dont le support possède une résistance à la déchirure supérieure ou égale à 250 mN dans le sens longitudinal du film.

13. Utilisation d'un film adhésif sensible à la pression tel que défini dans l'une des revendications 1 à 12 pour la protection temporaire de surfaces.

## Patentansprüche

1. Druckempfindliche Klebefolie zum temporären Schutz von Oberflächen, die einen mehrschichtigen Träger aufweist, der auf einer einzigen seiner Seiten mit einem druckempfindlichen Klebstoff beschichtet ist, wobei der Träger eine ungerade Anzahl von Schichten und mindestens eine geschäumte Polyolefinschicht aufweist, deren Kernschicht, das Polyolefin, aus einem radikalischen Polyethylen mit niedriger Dichte, einem linearen Polyethylen, einem Polypropylen, einem Copolymer aus Ethylen und Propylen oder einer Mischung dieser Verbindungen ausgewählt ist, wobei die geschäumte Schicht einen oder mehrere Zusatzstoffe umfasst, die aus Mattierungsmitteln, insbesondere Antiblockierungsmitteln, Gleitmitteln, Färbungsmitteln, UV-Stabilisatoren, UV-Barrieren, Antioxidantien oder Anti-Aging-Mitteln ausgewählt sind,
wobei die Folie nach dem Aufbringen auf die zu schützende Oberfläche eine Schälkraft (gemessen durch Dynamometrie gemäß einem angepassten Protokoll der Norm AFERA 5001 mit einer Abziehgeschwindigkeit von 10 mm/min bis 30.000 mm/min) im Bereich von 1 bis 700 cN/cm, vorzugsweise von 1 bis 400 cN/cm, aufweist.

2. Druckempfindliche Klebefolie nach Anspruch 1, wobei das radikalische Polyethylen mit niedriger Dichte eine Dichte im Bereich von 0,910 bis 0,930 und eine Schmelzflussrate im Bereich von 0,3 bis 10 dg/min aufweist, wobei das lineare Polyethylen eine Dichte im Bereich von 0,858 bis 0,961 und eine Schmelzflussrate im Bereich von 0,05 bis 10 dg/min aufweist, wobei das Polypropylen eine Dichte im Bereich von 0,860 bis 0,920 und eine Schmelzflussrate im Bereich von 0,3 bis 10 dg/min aufweist, wobei das Copolymer aus Ethylen und Propylen eine Dichte im Bereich von 0,860 bis 0,910 und einen Propylengehalt im Bereich von 25 bis 60 Gew.-% aufweist.

3. Druckempfindliche Klebefolie nach Anspruch 1 oder 2, wobei die geschäumte Schicht einen oder mehrere Zusatzstoffe umfasst, die aus Antiblockierungsmitteln, Färbungsmitteln oder Antioxidantien ausgewählt sind.

4. Druckempfindliche Klebefolie nach einem der Ansprüche 1 bis 3, wobei der Träger 3, 5, 7 oder 9 Schichten aufweist.

5. Druckempfindliche Klebefolie nach einem der Ansprüche 1 bis 4, wobei die Schicht (oder die Schichten) des Trägers, die nicht geschäumt ist (sind), im Wesentlichen aus einem Polyolefin, einem synthetischen Kautschuk, einem EthylenVinylacetat-Copolymer oder einer Mischung dieser Verbindungen gebildet ist (sind).

6. Druckempfindliche Klebefolie nach Anspruch 5, wobei die Schicht (oder die Schichten) des Trägers, die nicht geschäumt ist (sind), im Wesentlichen aus einem Polyolefin gebildet ist (sind), der ausgewählt ist aus einem radikalischen Polyethylen mit einer Dichte im Bereich von 0,910 bis 0,930 und einer Schmelzflussrate im Bereich von 0,3 bis 10 dg/min, einem linearen Polyethylen mit einer Dichte im Bereich von 0,858 bis 0,961 und einer Schmelzflussrate im Bereich von 0,05 bis 10 dg/min, einem Polypropylen mit einer Dichte im Bereich von 0,860 bis 0,920 und einer Schmelzflussrate im Bereich von 0,3 bis 10 dg/min, einem Copolymer aus Ethylen und Propylen mit einer Dichte im Bereich von 0,860 bis 0,910 und das einen Propylengehalt im Bereich von 25 bis 60 Gew.-% aufweist, oder einer Mischung dieser Verbindungen.

7. Druckempfindliche Klebefolie nach einem der Ansprüche 1 bis 6, wobei der druckempfindliche Klebstoff ein Acrylklebstoff oder ein Gummiklebstoff ist.

8. Druckempfindliche Klebefolie nach Anspruch 7, wobei der Klebstoff vernetzt ist.

9. Druckempfindliche Klebefolie nach einem der Ansprüche 1 bis 8, wobei der Klebstoff in der Größenordnung von 0,5 bis 25 g/m², vorzugsweise in der Größenordnung von 0,5 bis 20 g/m², noch bevorzugter in der Größenordnung von 0,5 bis 16 g/m², auf den Träger beschichtet ist.

10. Druckempfindliche Klebefolie nach einem der Ansprüche 1 bis 9, wobei der Träger vor dem Auftragen des Klebstoffs plasma- oder coronabehandelt ist.

11. Druckempfindliche Klebefolie nach einem der Ansprüche 1 bis 10, wobei der Träger auf beiden Seiten eine Oberflächenrauheit R_{A} im Bereich von 0,05 bis 6 µm aufweist.

12. Druckempfindliche Klebefolie nach einem der Ansprüche 1 bis 11, wobei der Träger eine Reißfestigkeit, die größer oder gleich 250 mN ist, in der Längsrichtung der Folie aufweist.

13. Verwendung einer druckempfindlichen Klebefolie, wie in einem der Ansprüche 1 bis 12 definiert, zum temporären Schutz von Oberflächen.

## Claims

1. A pressure-sensitive adhesive film for the temporary protection of surfaces which comprises a multilayer support coated on only one of its sides with a pressure-sensitive adhesive, said support comprising an odd number of layers, and at least one expanded polyolefin layer including the central layer, said polyolefin being selected from a radical low-density polyethylene, a linear polyethylene, polypropylene, a copolymer of ethylene and propylene, or a mixture of these compounds, said expanded layer comprising one or more additives selected from matting agents, in particular antiblocking agents; slip agents; colorants; UV stabilizers; UV barriers; antioxidants; and anti-aging agents;
said film having, after application onto the surface to be protected, a xx (measured by dynamometry according to a protocol adapted from standard AFERA 5001, with a peeling speed from 10 mm/min to 30,000 mm/min) in the range from 1 to 700 cN:cm, preferably from 1 to 400 cN/cm.

2. The pressure-sensitive adhesive film according to claim 1, wherein the radical low-density polyethylene has a density in the range from 0.910 to 0.930, and a flow index in the range from 0.3 to 10 dg/min; the linear polyethylene has a density in the range from 0.858 to 0.961 and a flow index in the range from 0.05 to 10 dg/min; the polypropylene has a density in the range from 0.860 to 0.920, and a flow index in the range from 0.3 to 10 dg/min; and the copolymer of ethylene and propylene has a density in the range from 0.860 to 0.910 and a propylene content in the range from 25 to 60% by weight.

3. The pressure-sensitive adhesive film according to claim 1 or 2, wherein the expanded layer comprises one or more additives selected from antiblocking agents, colorants and antioxidants.

4. The pressure-sensitive adhesive film according to one of claims 1 to 3, wherein the support comprises 3, 5, 7 or 9 layers.

5. The pressure-sensitive adhesive film according to one of claims 1 to 4, wherein the layer(s) of the support which is (are) not expanded, consist(s) essentially of a polyolefin, of a synthetic rubber, of a copolymer of ethylene and vinyl acetate, or of a mixture of these compounds.

6. The pressure-sensitive adhesive film according to claim 5, wherein the layer(s) of the support which is (are) not expanded, consist(s) essentially of a polyolefin selected from a radical polyethylene having a density in the range from 0.910 to 0.930 and a flow index in the range from 0.3 to 10 dg/min; a linear polyethylene having a density in the range from 0.858 to 0.961 and a flow index in the range from 0.05 to 10 dg/min; a polypropylene having a density in the range from 0.860 to 0.920 and a flow index in the range from 0.3 to 10 dg/min; and a copolymer of ethylene and propylene having a density in the range from 0.860 to 0.910 and having a propylene content in the range from 25 to 60% by weight; or a mixture of these compounds.

7. The pressure-sensitive adhesive film according to one of claims 1 to 6, wherein the pressure-sensitive adhesive is an acrylic adhesive or a rubber adhesive.

8. The pressure-sensitive adhesive film according to claim 7, wherein the adhesive is crosslinked.

9. The pressure-sensitive adhesive film according to one of claims 1 to 8, wherein the adhesive is coated on the support in an amount of 0.5 to 25 g/m², preferably in an amount of 0.5 to 20 g/m², more preferably in an amount of 0.5 to 16 g/m².

10. The pressure-sensitive adhesive film according to one of claims 1 to 9, wherein the support is plasma treated or corona treated before the application of the adhesive.

11. The pressure-sensitive adhesive film according to one of claims 1 to 10, the support of which has, on both sides, a surface roughness R_{A} in the range from 0.05 to 6 µm.

12. The pressure-sensitive adhesive film according to one of claims 1 to 11, the support of which has a tear strength greater than or equal to 250 mN in the longitudinal direction of the film.

13. Use of a pressure-sensitive adhesive film as defined in one of claims 1 to 12 for the temporary protection of surfaces.
